# EUROPÄISCHE PATENTSCHRIFT

(11) **EP 0 807 005 B1**
(45) Veröffentlichungstag und Bekanntmachung des Hinweises auf die Patenterteilung: **14.03.2001**
(21) Anmeldenummer: 96931747.8
(22) Anmeldetag: 10.08.1996
(51) Int. Cl.: B24B 15/04, F02M 61/18, F02M 61/16

(54) **VENTILSCHLIESSKÖRPER UND VERFAHREN UND VORRICHTUNG ZUR HERSTELLUNG VON DICHTSITZEN AN VENTILSCHLIESSKÖRPERN**
VALVE OBTURATOR AND METHOD AND DEVICE FOR PRODUCING THE SEALING SURFACE ON SUCH OBTURATORS
OBTURATEUR DE SOUPAPE ET PROCEDE ET DISPOSITIF POUR L'OBTENTION DE SURFACES D'ETANCHEITE SUR DE TELS OBTURATEURS

(30) Priorität: 05.12.1995 DE 19545333
(43) Veröffentlichungstag der Anmeldung: 19.11.1997
(73) Patentinhaber: ROBERT BOSCH GMBH, 70442 Stuttgart (DE)
(72) Erfinder: SCHÖFFEL, Eberhard, D-96049 Bamberg (DE); LAND, Peter, D-96175 Pettstadt (DE); SEIDEL, Josef, D-96149 Breitengüssbach (DE)
(86) Internationale Anmeldenummer: DE9601502
(87) Internationale Veröffentlichungsnummer: WO9720659

(56) Entgegenhaltungen:
- EP-A- 0 704 620
- WO-A-89/03280
- WO-A-96/12104
- DE-A- 3 925 043
- FR-A- 2 097 638
- FR-A- 2 438 172
- GB-A- 2 201 462
- US-A- 4 934 605
- US-A- 5 097 635
- PATENT ABSTRACTS OF JAPAN vol. 012, no. 274 (M-725), 29.Juli 1988 & JP,A,63 057169 (FUJITSU LTD), 11.März 1988,

## Beschreibung

Stand der Technik

Die Erfindung geht aus von einem Ventilschließkörper nach der Gattung des Anspruches 1 bzw. einem Verfahren nach der Gattung des Anspruches 2 bzw. einer Vorrichtung nach der Gattung des Anspruches 7. Es ist bereits ein Ventilschließkörper, ein Verfahren und eine Vorrichtung zur Durchführung des Verfahrens bekannt (DE 39 25 043 A1), wobei nach dem Verfahren der Ventilschließkörper mit der Ventilsitzfläche des Ventilsitzkörpers in Berührung gebracht und in eine Rotationsbewegung versetzt wird sowie eine parallel zur Drehachse wirkende Schwingungsbewegung mit hoher Frequenz auf den Ventilsitzkörper und den Ventilschließkörper übertragen wird. Dabei werden zwar Oberflächen mit sehr hoher Oberflächengüte erzeugt, jedoch ist nicht gewährleistet, daß bei einer Neigung der Schließkörperlängsachse gegenüber der Ventilsitzlängsachse noch eine ausreichende Abdichtung erfolgt. Für eine ideale Abdichtung des Ventilschließkörpers an der Ventilsitzfläche des Ventilsitzkörpers des Ventiles ist es notwendig, daß längs der Dichtlinie, an der sich der Ventilschließkörper mit seinem Dichtsitz und die Ventilsitzfläche des Ventilsitzkörpers berühren, eine möglichst gute Annäherung an die Kreisform beim Dichtsitz des Ventilschließkörpers und der Ventilsitzfläche vorliegt. Da jedoch der Ventilschließkörper nie so genau geführt werden kann, daß seine Schließkörperlängsachse identisch mit der Ventilsitzlängsachse zusammenfällt, also immer ein gewisses Führungsspiel zu einer Kipplage des Ventilschließkörpers gegenüber der Ventilsitzlängsachse führt, muß zum Erreichen der idealen Kreisform längs der Dichtlinie innerhalb des Berührungsbereiches zwischen Ventilschließkörper und Ventilsitzfläche der Dichtsitz am Ventilschließkörper kugelig ausgeführt sein.

Vorteile der Erfindung

Der erfindungsgemäße Ventilschließkörper mit den kennzeichnenden Merkmalen des Anspruchs 1 hat den Vorteil, daß er auch bei nicht exakter Führung im Ventil mittels eines schmalen Dichtsitzes ein dichtes Absperren des Ventiles ermöglicht. Das erfindungsgemäße Verfahren zur Herstellung von Dichtsitzen an Ventilschließkörpern nach Anspruch 2 und die erfindungsgemäße Vorrichtung zur Durchführung des Verfahrens zur Herstellung von Dichtsitzen an Ventilschließkörpern nach Anspruch 7 ermöglichen auf einfache Art und Weise die Erzeugung von idealen rotationssymmetrischen Dichtsitzen in Form einer Kugelzone.

Durch die in den Unteransprüchen aufgeführten Maßnahmen sind vorteilhafte Weiterbildungen und Verbesserungen des im Anspruch 2 angegebenen Verfahrens bzw. der im Anspruch 7 angegebenen Vorrichtung möglich.

Besonders vorteilhaft ist es, die Anpreßkraft auf den Ventilschließkörper durch Druckluft zu erzeugen und damit berührungslos und ohne Verschleiß die Anpreßkraft des Ventilschließkörpers an den Werkzeugkörper zu bewirken.

Vorteilhaft ist es ebenfalls, die hochtourige Drehung des Ventilschließkörpers durch auf den Ventilschließkörper gerichtete Druckluft zu erzeugen, also berührungslos und verschleißfrei.

Zeichnung

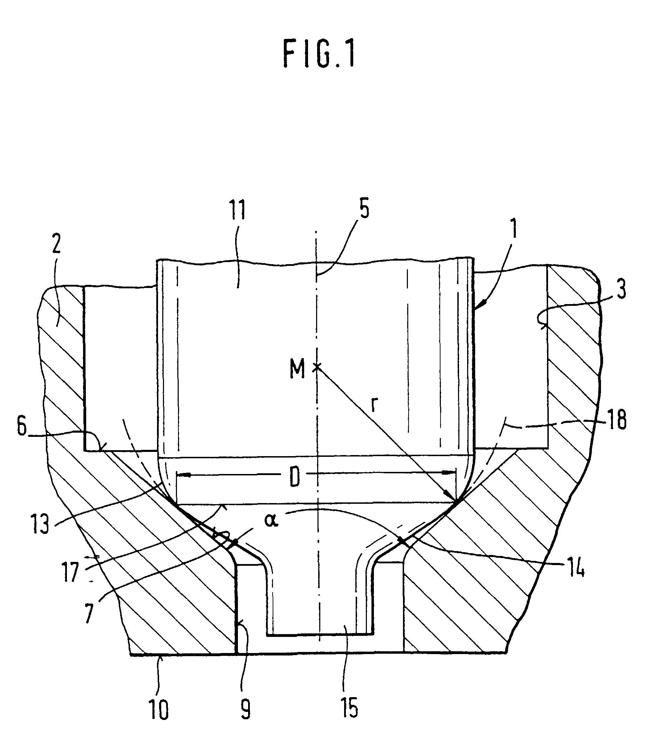

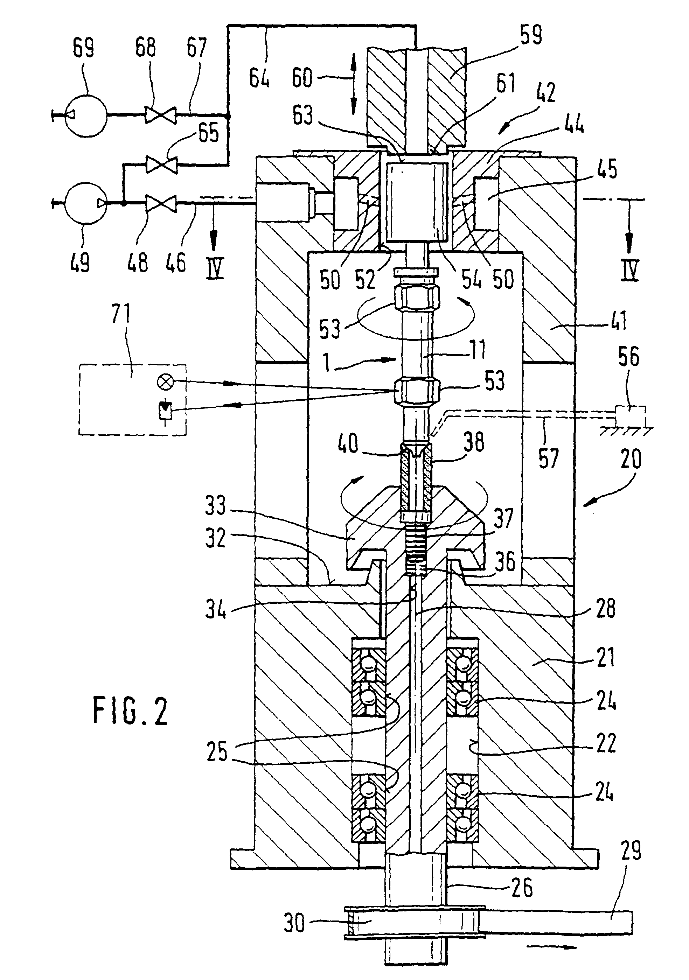

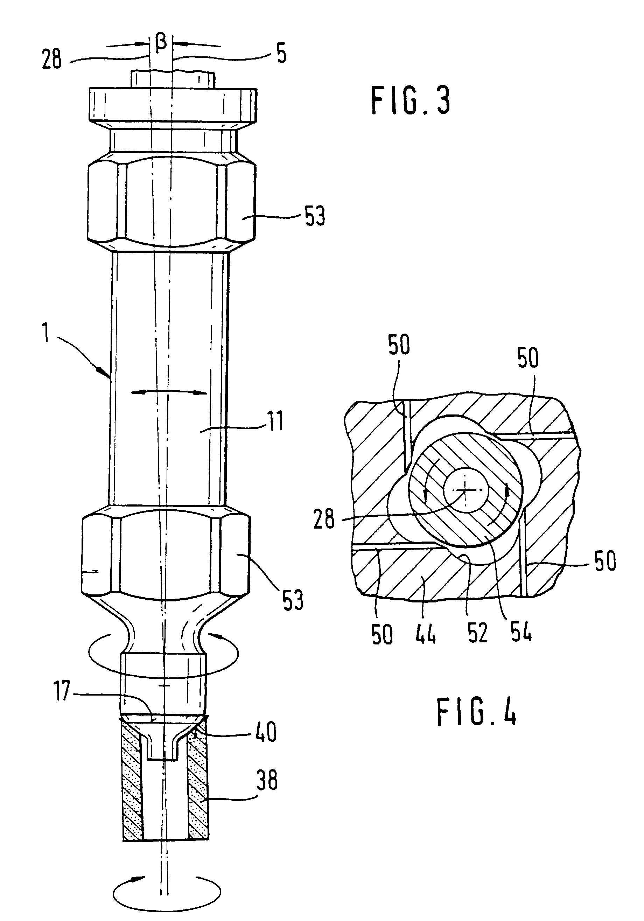

Ausführungsbeispiele der Erfindung sind in der Zeichnung vereinfacht dargestellt und in der nachfolgenden Beschreibung näher erläutert. Es zeigen Figur 1 einen erfindungsgemäß ausgebildeten Ventilschließkörper in Form einer Ventilnadel in Teildarstellung anliegend an einer Ventilsitzfläche eines Ventilsitzkörpers, Figur 2 eine vereinfachte Darstellung einer erfindungsgemäßen Vorrichtung zur Herstellung eines erfindungsgemäßen Ventilschließkörpers nach Figur 1, Figur 3 eine Teildarstellung eines erfindungsgemäß ausgebildeten Ventilschließkörpers anliegend an einem Werkzeug nach Figur 2, Figur 4 einen Schnitt entlang der Linie IV-IV in Figur 2.

Beschreibung der Ausführungsbeispiele

In der Figur 1 ist mit 1 ein Ventilschließkörper in Form einer Ventilnadel teilweise dargestellt, wie er bei bekannten Brennstoffeinspritzventilen für Brennstoffeinspritzanlagen von gemischverdichtenden fremdgezündeten Brennkraftmaschinen Verwendung findet. Wie beispielsweise in der DE 39 25 043 A1 gezeigt, ist der Ventilschließkörper in einem Ventilsitzkörper 2 in einer Führungsbohrung 3 geführt und entlang einer Schließkörperlängsachse 5 axial verschiebbar. Bei dem in Figur 1 dargestellten Teilausschnitt des Ventiles geht in Strömungsrichtung gesehen die Führungsbohrung 3 über eine Stufe 6 in eine sich kegelförmig verjüngende Ventilsitzfläche 7 über, an die sich stromabwärts eine zylindrische Abspritzöffnung 9 anschließt, die an einer Unterfläche 10 des Ventilsitzkörpers 2 endet. Der nadelförmige Ventilschließkörper weist einen rotationssymmetrisch zur Schließkörperlängsachse 5 verlaufenden Ventilschaft 11 auf, der zylindrisch ausgebildet ist. An den Ventilschaft schließt sich ein beispielsweise gerundeter Übergangsabschnitt 13 an und daran nach stromabwärts ein sich verjüngender kegelförmiger Abschnitt 14, der in einen zylindrischen Ventilzapfen 15 übergeht, der in die Abspritzöffnung 9 ragt. Die Berührungslinie zwischen dem gerundet ausgebildeten Übergangsabschnitt 13 und dem kegelförmigen Abschnitt 14 bildet den Dichtsitz 17, der senkrecht zur Schließkörperlängsachse 5 verläuft und der im Idealfall die Linie darstellt, die als Kreis ausgebildet ist und mit der der Ventilschließkörper im geschlossenen Zustand des Ventiles dicht an der Ventilsitzfläche 7 anliegt. Gemäß der Erfindung soll der Dichtsitz 17 als schmale Kugelzone ausgebildet sein, mit einem Radius r = D/2cosα/2 um den Mittelpunkt M auf der Schließkörperlängsachse 5. Dabei bedeutet D den Durchmesser des Dichtsitzes 17 senkrecht zur Schließkörperlängsachse 5 und α den Kegelwinkel der Ventilsitzfläche 7. Gestrichelt dargestellt ist ein fiktiver Kreis 18 mit dem Radius r um den Mittelpunkt M, dessen Kugelzone der Dichtsitz 17 bildet. Dabei hat die Kugelzone eine Höhe von etwa 20 bis 100 µm in Richtung der Schließkörperlängsachse 5. Der Kegelwinkel des kegelförmigen Abschnittes 14 ist größer als der von der kegelförmigen Ventilsitzfläche 7 eingeschlossene Kegelwinkel α.

In der Figur 2 ist eine Vorrichtung zur Herstellung von idealen rotationssymmetrischen Dichtsitzen an Ventilschließkörpern, wie z. B. dem in Figur 1 gezeigten, schematisch dargestellt. Die Vorrichtung nach Figur 2 weist eine Halteeinheit 20 auf, die einen Grundkörper 21 hat. Der Grundkörper 21 wird von einer vertikal verlaufenden gestuften Durchgangsbohrung 22 durchdrungen, in der Wälzlager 24 angeordnet sind. In die Innenbohrung 25 jedes Wälzlagers 24 ist ein rohrförmiger Werkzeugaufnahmekörper 26 eingepreßt, der sich durch die Durchgangsbohrung 22 des Grundkörpers 21 erstreckt und spielfrei durch die Wälzlager 24 gelagert um eine vertikal verlaufende Werkzeuglängsachse 28 drehbar ist. Die Verdrehung des Werkzeugaufnahmekörpers 26 erfolgt beispielsweise wie angedeutet durch einen Riementrieb 29, der über eine Riemenscheibe 30 an dem Werkzeugaufnahmekörper 26 angreift und diesen in Drehung versetzt. Der Antrieb des Werkzeugaufnahmekörpers 26 könnte auch auf andere Art und Weise erfolgen, beispielsweise durch einen nicht dargestellten Elektromotor und mittels eines Über- oder Untersetzungsgetriebes.

Der Grundkörper 21 hat dem Riementrieb 29 abgewandt eine Auflagefläche 32, über die sich ein Einspannende 33 des Werkzeugaufnahmekörpers 26 erhebt. Konzentrisch zur Werkzeuglängsachse 28 verläuft durch den Werkzeugaufnahmekörper 26 eine Längsbohrung 34, die im Bereich des Einspannendes 33 ein Innengewinde 36 hat, in das ein mit einem Außengewinde versehener Gewindeschaft eines Werkzeugträgers 37 eingeschraubt ist. Außer dem Gewindeschaft hat der Werkzeugträger 37 einen Kopf, auf den ein Werkzeugkörper 38 aufgesetzt und beispielsweise durch Verkleben befestigt ist. Der Werkzeugkörper 38 ist rohrförmig ausgebildet und erstreckt sich in axialer Richtung entlang der Werkzeuglängsachse 28, wobei er beispielsweise teilweise in das Einspannende 33 ragt und mit dem Werkzeugaufnahmekörper 26 spielfrei verdrehbar ist. An seinem dem Werkzeugträger 37 abgewandten Ende hat der Werkzeugkörper 38 eine sich kegelförmig zum hohlen Inneren hin verjüngende Bearbeitungsfläche 40, deren Kegelwinkel dem Kegelwinkel der Ventilsitzfläche 7 in Figur 1 entspricht.

Auf die Auflagefläche 32 des Grundkörpers 21 ist wenigstens ein Haltebügel 41 aufgesetzt und daran befestigt. Mit axialem Abstand zum Grundkörper 21 wird durch den Haltebügel 41 ein Verdrehaggregat 42 gehalten, das beispielsweise einen Luftdüsenkörper 44 aufweist, der koaxial zur Werkzeuglängsachse 28 angeordnet ist. Am Luftdüsenkörper 44 ist ein umlaufender Luftkanal 45 ausgebildet, der beispielsweise am Umfang verläuft und durch den Haltebügel 41 abgedeckt wird und der mit einer Druckluftleitung 46 verbunden ist. Die Druckluftleitung 46 ist durch ein erstes Druckluftsperrventil 48 absperrbar oder mit einer Druckluftpumpe 49 oder einer anderen Druckluftquelle verbindbar. Von dem Luftkanal 45 des Luftdüsenkörpers 44 führen horizontal oder geneigt zur Werkzeuglängsachse 28 in radialer Richtung Luftdüsen 50, die wie in Figur 4 gezeigt ist, versetzt gegenüber der Werkzeuglängsachse 28 an dieser vorbei verlaufen. Die von dem Luftkanal 45 ausgehenden Luftdüsen 50 münden in einen von dem Luftdüsenkörper 44 in radialer Richtung umschlossenen Luftantriebsraum 52.

Der Ventilschließkörper 1 wird in axialer Richtung durch den Luftantriebsraum 52 hindurchgeführt und berührt mit seinem Dichtsitz 17, wie in Figur 3 in geändertem Maßstab dargestellt ist, die Bearbeitungsfläche 40 des Werkzeugkörpers 38. Am Ventilschaft 11 sind in bekannter Weise Führungsabschnitte 53 ausgebildet, die in der Führungsbohrung 3 des Ventilsitzkörpers 2 gleiten und damit den Ventilschließkörper 1 in radialer Richtung führen. Bei elektromagnetisch betätigten Ventilen ist mit dem dem Dichtsitz 17 abgewandten Ende des Ventilschaftes 11 ein zylindrischer Anker 54 verbunden, der bei in die Vorrichtung eingesetztem Ventilschließkörper in den Luftantriebsraum 52 mit Spiel ragt und durch die aus den Luftdüsen 50 austretenden Luftstrahlen beispielsweise etwa tangential in Richtung auf seinen Umfang getroffen und in eine dem Werkzeugkörper 38 entgegengesetzte Drehung hochtourig angetrieben wird. In der Figur 4 sind vier Luftdüsen 50 mit gleichmäßigem Abstand zueinander gezeigt, es können jedoch auch zwei oder drei oder mehr als vier Luftdüsen sein, die auf den Anker 54 gerichtet sind. Die Luftdüsen 50 müssen nicht zwangsläufig auf den Anker 54 gerichtet sein, sie können genausogut an einer anderen Stelle der axialen Erstreckung des Ventilschließkörpers 1 angeordnet sein und auf diesen Luftstrahlen richten. Der beispielsweise aus einem feinstkörnigen Korundmaterial bestehende Werkzeugkörper 38 kann mit Flüssigkeit benetzt werden, wozu eine Flüssigkeitsversorgungseinrichtung 56 dient, die in Figur 2 gestrichelt dargestellt ist und über eine Flüssigkeitsleitung 57 Flüssigkeit der Bearbeitungsfläche 40 zuführt.

Oberhalb des Verdrehaggregates 42 ist an der Halteeinheit 20 ein Luftkraftkörper 59 angeordnet, der entlang der Werkzeuglängsachse 28 nach oben und unten verschiebbar gelagert ist, wie ein Doppelrichtungspfeil 60 andeutet. Eine Luftkraftkörperendfläche 61 verläuft wie eine Ankerstirnfläche 63 horizontal und ist auf diese ausgerichtet. Von der Luftkraftkörperendfläche 61 geht eine den Luftkraftkörper 59 durchdringende Luftleitung 64 aus, die zu einem zweiten Druckluftsperrventil 65 führt. An die Luftleitung 64 zwischen Luftkraftkörper 59 und zweitem Druckluftsperrventil 65 ist eine Vakuumleitung 67 angeschlossen, in der ein Vakuumsperrventil 68 angeordnet ist. Das Vakuumsperrventil 68 ermöglicht oder trennt die Verbindung von der Vakuumleitung 67 zu einer Saugpumpe 69. Zum Einsetzen des Ventilschließkörpers 1 in die Vorrichtung und damit auf den Werkzeugkörper 38 oder zum Entfernen des Ventilschließkörpers 1 aus der Vorrichtung wird das zweite Druckluftsperrventil 65 geschlossen und das Vakuumsperrventil 68 geöffnet, so daß die Saugpumpe 69 über die Vakuumleitung 67 und die Luftleitung 64 einen Unterdruck erzeugt, sobald der Luftkraftkörper 59 mit seiner Luftkraftkörperendfläche 61 an der Ankerstirnfläche 63 anliegt. Die Druckdifferenz zwischen dem auf den Ventilschließkörper 1 mit Anker 54 wirkenden Atmosphärendruck und dem Vakuum in der Luftleitung 64 bewirkt, daß der Ventilschließkörper 1 an dem Luftkraftkörper 59 gehalten wird und bei einer Bewegung des Luftkraftkörpers 59 nach unten auf den Werkzeugkörper 38 aufgesetzt und bei einer Bewegung des Luftkraftkörpers 59 nach oben von dem Werkzeugkörper 38 abgehoben werden kann. Auf diese Art und Weise erfolgt der Wechsel der einzelnen zu bearbeitenden Ventilschließkörper 1. Sobald der Ventilschließkörper 1 auf den Werkzeugkörper 38 aufgesetzt ist, wird das Vakuumsperrventil 68 geschlossen. Danach wird das zweite Druckluftsperrventil 65 geöffnet und die Luftleitung 64 mit der Druckluftpumpe 49 verbunden, so daß in der Luftleitung 64 ein Überdruck aufgebaut wird, dessen Druckkraft auf die Ankerstirnfläche 63 zu einer in Richtung zum Werkzeugkörper 38 hin wirkenden Anpreßkraft führt. Dabei besteht zwischen der Ankerstirnfläche 63 und der Luftkraftkörperendfläche 61 ein kleiner axialer Abstand, um den der Luftkraftkörper 59 nach oben gefahren ist, so daß sich diese beiden Körper berührungslos gegenüberstehen. Die Betätigung des ersten Druckluftsperrventils 48, des zweiten Druckluftsperrventils 65 und des Vakuumsperrventils 68 erfolgt beispielsweise elektromagnetisch oder durch ein Steuermedium wie Luft oder Öl.

Zur Durchführung des Verfahrens ist die Radialführung des Ankers 54 in dem Luftantriebsraum 52 derart mit Spiel ausgebildet, daß die Schließkörperlängsachse 5 gegenüber der vertikal ausgerichteten Werkzeuglängsachse 28 um einen Winkel β, der etwa zwischen 10' und 80' beträgt, geneigt verläuft. Die Neigung der Schließkörperlängsachse 5 gegenüber der Werkzeuglängsachse 28 führt bei einer Drehung des Ventilschließkörpers 1 damit eine Präzessionsbewegung aus, wodurch der Dichtsitz 17 durch den beispielsweise aus einem feinkörnigen Korundmaterial bestehenden Werkzeugkörper 38 in einer axialen Höhe von ca. 10 bis 100µm in Form einer Kugelzöne gemäß den Erläuterungen zu Figur 1 bearbeitet wird. Die Ausbildung des Dichtsitzes 17 als schmale Kugelzone gewährleistet, daß der Ventilschließkörper 1 im in das Ventil eingebauten Zustand trotz des immer vorhandenen Führungsspieles im geschlossenen Zustand immer dichtend an der Ventilsitzfläche 7 des Ventilsitzkörpers 2 anliegt.

Die Drehung des Ventilschließkörpers 1 kann durch einen in Figur 2 gestrichelt dargestellten Bewegungssensor 71 überwacht werden. Der Bewegungssensor 71 ist beispielsweise als optischer Sensor ausgebildet, mit einer Lichtstrahlen auf einen Führungsabschitt 53 des Ventilschließkörpers 1 aussendenden Lichtquelle und einem die vom Führungsabschnitt 53 reflektierten Lichtstrahlen empfangenden lichtempfindlichen Element, beispielsweise einer Fotodiode. Einsetzbar sind auch andere Bewegungssensoren 71, die beispielsweise induktiv oder mit Magneten arbeiten.

## Patentansprüche

1. Ventilschließkörper, insbesondere für Brennstoffeinspritzventile von Brennkraftmaschinen, mit einer Schließkörperlängsachse, einem Ventilschaft, einem Übergangsabschnitt zwischen dem Ventilschaft und einem kegelförmigen Abschnitt und einem in der Berührungslinie zwischen dem Übergangsabschnitt und dem kegelförmigen Abschnitt liegenden rotationssymmetrischen Dichtsitz, dadurch gekennzeichnet, daß der Dichtsitz (17) als schmale Kugelzone mit einem Radius r = D/2cosα/2 ausgebildet ist, wobei D den Durchmesser des Dichtsitzes (17) senkrecht zur Schließkörperlängsachse (5) und α den Kegelwinkel einer kegelförmigen Ventilsitzfläche (7) bedeutet, mit der der Dichtsitz (17) zusammenwirkt.

2. Verfahren zur Herstellung von idealen rotationssymmetrischen Dichtsitzen an Ventilschließkörpern nach Anspruch 1, insbesondere für Brennstoffeinspritzventile von Brennkraftmaschinen, wobei der Dichtsitz des Ventilschließkörpers mit einem Werkzeugkörper in Berührung gebracht und der Ventilschließkörper um eine Schließkörperlängsachse sowie der Werkzeugkörper um eine vertikale Werkzeuglängsachse relativ zueinander in eine Rotationsbewegung versetzt und in Richtung aufeinander zu mit einer Anpreßkraft beaufschlagt wird, dadurch gekennzeichnet, daß die Schließkörperlängsachse (5) gegenüber der Werkzeuglängsachse (28) derart geneigt ist, daß der Ventilschließkörper (1) eine Präzessionsbewegung ausführt.

3. Verfahren nach Anspruch 2, dadurch gekennzeichnet, daß die Anpreßkraft durch auf den Ventilschließkörper (1) gerichtete Druckluft erzeugt wird.

4. Verfahren nach Anspruch 2 oder 3, dadurch gekennzeichnet, daß Ventilschließkörper (1) und Werkzeugkörper (38) in entgegengesetzten Richtungen gedreht werden.

5. Verfahren nach einem der Ansprüche 2 bis 4, dadurch gekennzeichnet, daß der Ventilschließkörper (1) durch auf seinen Umfang unter einem Winkel gerichtete Druckluft hochtourig in Drehung versetzt wird.

6. Verfahren nach einem der Ansprüche 2 bis 5, dadurch gekennzeichnet, daß der Werkzeugkörper (38) vertikal angeordnet ist und der Ventilschließkörper (1) von oben auf den Werkzeugkörper (38) aufgesetzt wird.

7. Vorrichtung zur Herstellung von idealen rotationssymmetrischen Dichtsitzen an Ventilschließkörpern, insbesondere für Brennstoffeinspritzventile an Brennkraftmaschinen, mit einem Werkzeugkörper, der in einem Werkzeugaufnahmekörper einer Halteeinheit vertikal gehalten und mit diesem um eine vertikale Werkzeuglängsachse verdrehbar ist, mit einem den Ventilschließkörper um eine Schließkörperlängsachse drehenden Verdrehaggregat, mit einer am Ventilschließkörper angreifenden Radialführung und mit einer Ventilschließkörper und Werkzeugkörper aufeinander zu beaufschlagenden Anpreßkraft, dadurch gekennzeichnet, daß zur Durchführung des Verfahrens nach Anspruch 2, die Radialführung derart am Ventilschließkörper (1) angreift, daß die Schließkörperlängsachse (5) gegenüber der Werkzeuglängsachse (28) geneigt verläuft.

8. Vorrichtung nach Anspruch 7, dadurch gekennzeichnet, daß der Werkzeugkörper (38) mit Flüssigkeit benetzt ist.

9. Vorrichtung nach Anspruch 7, dadurch gekennzeichnet, daß ein Luftkraftkörper (59) vorgesehen ist, aus dem Druckluft zur Erzeugung der Anpreßkraft ausströmt und auf den Ventilschließkörper (1) gerichtet ist.

10. Vorrichtung nach Anspruch 7, dadurch gekennzeichnet, daß das Verdrehaggregat (42) einen Luftdüsenkörper (44) aufweist, der gegenüber der Schließkörperlängsachse (5) versetzte und auf den Umfang des Ventilschließkörpers (1) gerichtete Luftdüsen (50) aufweist, über die Druckluft austritt, die den Ventilschließkörper (1) hochtourig in eine der Drehung des Werkzeugkörpers (38) entgegengesetzte Drehung antreibt.

## Claims

1. Valve-closing body, in particular for fuel injection valves for internal combustion engines, with a closing body longitudinal axis, with a valve stem, with a transitional portion between the valve stem and a conical portion and with a rotationally symmetrical sealing seat lying at the line of contact between the transitional portion and the conical portion, characterized in that the sealing seat (17) is designed as a narrow spherical zone with a radius r = D/2cosα/2, D being the diameter of the sealing seat (17) perpendicularly to the closing body longitudinal axis (5) and α being the cone angle of a conical valve-seat surface (7) with which the sealing seat (17) cooperates.

2. Method for the production of ideal rotationally symmetrical sealing seats on valve-closing bodies according to Claim 1, in particular for fuel injection valves of internal combustion engines, the sealing seat of the valve-closing body being brought into contact with the tool body, and the valve-closing body being set about a closing body longitudinal axis and the tool body about a vertical tool longitudinal axis in rotational movement relative to one another and being subjected to a pressing force in the direction towards one another, characterized in that the closing body longitudinal axis (5) is inclined in relation to the tool longitudinal axis (28), in such a way that the valve-closing body (1) executes a precessional movement.

3. Method according to Claim 2, characterized in that the pressing force is generated by compressed air directed onto the valve-closing body (1).

4. Method according to Claim 2 or 3, characterized in that the valve-closing body (1) and the tool body (38) are rotated in opposite directions.

5. Method according to one of Claims 2 to 4, characterized in that the valve-closing body (1) is set in rotation at high speed by compressed air directed onto its circumference at an angle.

6. Method according to one of Claims 2 to 5, characterized in that the tool body (38) is arranged vertically and the valve-closing body (1) is placed onto the tool body (38) from above.

7. Apparatus for the production of ideal rotationally symmetrical sealing seats on valve-closing bodies, in particular for fuel injection valves on internal combustion engines, with a tool body which is held vertically in a tool-receiving body of a holding unit and is rotable together with said tool-receiving body about a vertical tool longitudinal axis, with a rotary assembly rotating the valve-closing body about a closing body longitudinal axis, with a radial guide acting on the valve-closing body and with a pressing force to which the valve-closing body and tool body are subjected in the direction towards one another, characterized in that, in order to carry out the method according to Claim 2, the radial guide acts on the valve-closing body (1) in such a way that the closing body longitudinal axis (5) runs at an inclination to the tool longitudinal axis (28).

8. Apparatus according to Claim 7, characterized in that the tool body (38) is wetted with liquid.

9. Apparatus according to Claim 7, characterized in that an air-power body (59) is provided, out of which compressed air for generating the pressing force flows and is directed onto the valve-closing body (1).

10. Apparatus according to Claim 7, characterized in that the rotary assembly (42) has an air-nozzle body (44) which has air nozzles (50) which are offset in relation to the closing body longitudinal axis (5) and are directed onto the circumference of the valve-closing body (1) and via which compressed air emerges which drives the valve-closing body (1) at high speed in rotation opposite to the rotation of the tool body (38).

## Revendications

1. Corps d'obturation de soupape, en particulier pour injecteurs de moteurs à combustion interne, comprenant un axe longitudinal de corps d'obturation, une tige de soupape, une section de passage entre la tige de soupape et une section en forme de cône, et un siège d'étanchéité symétrique de révolution se trouvant dans la ligne de contact entre la section de passage et la section en forme de cône,
caractérisé en ce que
le siège d'étanchéité (17) est constitué sous la forme d'une zone conique étroite avec un rayon r = D/2cosα/2, formule dans laquelle D est le diamètre du siège d'étanchéité (17) perpendiculairement à l'axe longitudinal (5) du corps d'obturation et α est l'angle de cône d'une surface (7) de siège de soupape en forme de cône, surface avec laquelle coopère le siège d'étanchéité (17).

2. Procédé servant à réaliser des sièges d'étanchéité idéaux symétriques de révolution sur des corps d'obturation de soupape selon la revendication 1, en particulier pour des injecteurs de carburant de moteurs à combustion interne, dans lequel le siège d'étanchéité du corps d'obturation de soupape est mis en contact avec un corps d'outil et le corps d'obturation de soupape reçoit un mouvement de rotation autour d'un axe longitudinal de corps d'obturation ainsi que le corps de l'outil autour d'un axe longitudinal vertical d'outil relativement l'un par rapport à l'autre et sont sollicités en direction l'un de l'autre par une force de pressage,
caractérisé en ce que
l'axe longitudinal (5) du corps d'obturation est incliné par rapport à l'axe longitudinal (28) de l'outil de telle manière que le corps d'obturation de soupape (1) exécute un mouvement de précession.

3. Procédé selon la revendication 2,
caractérisé en ce que
la force de pressage est produite par de l'air comprimé dirigé sur le corps d'obturation de soupape (1).

4. Procédé selon la revendication 2 ou 3,
caractérisé en ce que
l'on fait tourner le corps d'obturation de soupape (1) et le corps d'outil (38) en sens opposés.

5. Procédé selon l'une quelconque des revendications 2 à 4,
caractérisé en ce que
le corps d'obturation de soupape (1) est mis en rotation à vitesse élevée par de l'air comprimé dirigé sur son pourtour sous un certain angle.

6. Procédé selon l'une quelconque des revendications 2 à 5,
caractérisé en ce que
le corps de l'outil (38) est disposé verticalement et le corps d'obturation de soupape (1) est mis par en haut sur le corps de l'outil (38).

7. Dispositif servant à réaliser des sièges d'étanchéité symétriques de révolution, idéaux, sur des corps d'obturation de soupape, en particulier pour des injecteurs de carburant sur des moteurs à combustion interne, comprenant un corps d'outil, qui est maintenu verticalement dans un corps de réception d'outil d'une unité de maintien et que l'on peut faire tourner avec celui-ci autour d'un axe vertical longitudinal d'outil, un sous ensemble de torsion faisant tourner le corps d'obturation de soupape autour d'un axe longitudinal de corps d'obturation, un guidage radial venant en prise sur le corps d'obturation de soupape et une force de pressage qui amène l'un sur l'autre le corps d'obturation de soupape et le corps de l'outil,
caractérisé en ce que
pour la mise en oeuvre du procédé selon la revendication 2 le guidage radial vient en prise d'une manière telle sur le corps d'obturation de soupape (1), que l'axe longitudinal (5) du corps d'obturation s'étend de façon inclinée par rapport à l'axe longitudinal de l'outil (28).

8. Dispositif selon la revendication 7,
caractérisé en ce que
le corps de l'outil (38) est arrosé avec un liquide.

9. Dispositif selon la revendication 7,
caractérisé en ce que
il est prévu un corps à jet d'air (59) à partir duquel de l'air comprimé s'écoule pour produire la force de pressage et est dirigé sur le corps d'obturation de soupape (1).

10. Dispositif selon la revendication 7,
caractérisé en ce que
le sous-ensemble de torsion (42)présente un corps de buses d'air (44) qui présente des buses d'air (50) orientées de façon décalée par rapport à l'axe longitudinal (5) du corps d'obturation et dirigées sur le pourtour du corps d'obturation de soupape (1), buses d'air au moyen desquelles sort l'air comprimé qui entraîne en rotation à vitesse élevée dans le sens opposé à celui de la rotation du corps de l'outil (38) le corps d'obturation de soupape (1).
